# EUROPEAN PATENT APPLICATION

(11) **EP 4 679 254 A1**
(43) Date of publication of application: **14.01.2026**
(21) Application number: 25154482.1
(22) Date of filing: 28.01.2025
(51) Int. Cl.: G06F 3/16

(54) **METHOD, APPARATUS, AND ELECTRONIC DEVICE FOR PROCESSING AUDIO DATA**

(30) Priority: 09.07.2024 CN 202410917828
(71) Applicant: Beijing Zitiao Network Technology Co., Ltd., Beijing 100190 (CN)
(72) Inventor: ZHANG, Jiajie, Beijing 100028 (CN); CHENG, Ximou, Beijing 100028 (CN)
(74) Representative: Marks & Clerk LLP

(57) **Abstract**

The disclosed embodiments provide a method, an apparatus, and an electronic device for processing audio data. The method is applied in a first electronic device and comprises: receiving (S201) wirelessly first audio data and second audio data from a second electronic device, wherein the first electronic device and the second electronic device are wirelessly connected via Bluetooth, the first audio data corresponds to a first audio type, and the second audio data corresponds to a second audio type; mixing (S202) the first audio data and the second audio data to obtain target audio data; and playing (S203) the target audio data.

## Description

### FIELD

The embodiments of the present disclosure relate to a field of computer technology, and in particular, to a method, an apparatus, and an electronic device for processing audio data.

### BACKGROUND

The electronic device can establish a Bluetooth connection with a headset and play by the headset audio data sent by the electronic device to the headset via Bluetooth. In some scenarios, audio from multiple different sources is playing.

In actual application, the audio from the multiple different sources is usually mixed and processed by a preset algorithm in the electronic device to obtain target audio. And the target audio data is sent to the headset. The headset receives and plays the target audio data. In the above process, different types of electronic devices use different preset algorithms, and there are differences in the different pieces of target audio data processed by the different preset algorithms. When the different pieces of target audio data processed by the different preset algorithms are played through the headset, there will be differences in the playback effects. This results in poor effect of processing the audio data.

### SUMMARY

The embodiments of the present disclosure provide a method, an apparatus, and an electronic device for processing audio data to solve the problem of poor effect of processing the audio data.

In a first aspect, an embodiment of the present disclosure provides a method for processing audio data. The method is applied in a first electronic device and comprises: receiving wirelessly first audio data and second audio data from a second electronic device, wherein the first electronic device and the second electronic device are wirelessly connected via Bluetooth, the first audio data corresponds to a first audio type, and the second audio data corresponds to a second audio type; mixing the first audio data and the second audio data to obtain target audio data; and playing the target audio data.

In a second aspect, an embodiment of the present disclosure provides an apparatus for processing audio data. The apparatus comprises: a receiving module configured to wirelessly receive first audio data and second audio data from a second electronic device, wherein the second electronic device and the apparatus for processing the audio data are wirelessly connected via Bluetooth, the first audio data corresponds to a first audio type, and the second audio data corresponds to a second audio type; a processing module configured to mix the first audio data and the second audio data to obtain target audio data; and a playing module configured to play the target audio data.

In a third aspect, the present disclosure provides a chip having a computer program stored thereon. Wherein the computer program, when executed by the chip, implement the method as described in the first aspect.

In a fourth aspect, the present disclosure provides a chip module having a computer program stored thereon. Wherein the computer program, when executed by the chip module, implement the method as described in the first aspect.

In a fifth aspect, an embodiment of the present disclosure provides an electronic device. The electronic device comprises at least one processor; and a memory communicatively connected to the at least one processor. Wherein the memory stores instructions executable by the at least one processor, and the instructions, when executed by the at least one processor, cause the at least one processor to perform the method as described in the first aspect.

In a sixth aspect, an embodiment of the present disclosure provides a non-transitory computer-readable storage medium storing computer instructions. Wherein the computer instructions are used to cause a computer to execute the method as described in the first aspect.

In a seventh aspect, an embodiment of the present disclosure provides a computer program product comprising a computer program. Wherein the computer program, when executed by a processor, implement the method as described in the first aspect.

The embodiments of the present disclosure provide a method, an apparatus, and an electronic device for processing audio data. Wherein a first electronic device wirelessly receives first audio data and second audio data from a second electronic device. The first electronic device and the second electronic device are wirelessly connected via Bluetooth. The first audio data corresponds to a first audio type, and the second audio data corresponds to a second audio type. The first audio data and the second audio data are mixed to obtain target audio data. The target audio data is played. In the above process, the two types of audio data can be mixed by the first electronic device to obtain the target audio data. By processing and playing by the first electronic device, it is possible to avoid situations where the preset algorithm used by the second electronic device varies and the target audio data processed by different preset algorithms varies, resulting in differences in the playback effects through the first electronic device. Therefore, the effect of processing the audio data is improved.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Obviously, the drawings described below are some embodiments of the present disclosure. For ordinary technicians in this field, other drawings can be obtained based on these drawings without paying creative labor.
FIG.1 is a schematic diagram of an application scenario provided by an embodiment of the present disclosure;
FIG.2 is a schematic flow chart of a method for processing audio data provided by an embodiment of the present disclosure;
FIG. 3 is a schematic flow chart of another method for processing audio data provided by an embodiment of the present disclosure;
FIG. 4 is a schematic diagram of a process of decompressing audio data provided by an embodiment of the present disclosure;
FIG. 5 is a schematic diagram of a process of decoding audio data provided by an embodiment of the present disclosure;
FIG. 6 is a schematic diagram of a process of mixing provided by an embodiment of the present disclosure;
FIG. 7 is a schematic diagram of a process of processing audio data provided by an embodiment of the present disclosure;
FIG. 8 is a structural block diagram of an apparatus for processing audio data provided by an embodiment of the present disclosure; and
FIG. 9 is a structural block diagram of an electronic device provided in an embodiment of the present disclosure.

### DETAILED DESCRIPTION OF EMBODIMENTS

Exemplary embodiments will be described in detail herein, examples of which are shown in the accompanying drawings. When the following description refers to the drawings, the same numbers in different drawings represent the same or similar elements unless otherwise indicated. The embodiments described in the following exemplary embodiments do not represent all embodiments consistent with the present disclosure. Instead, they are merely examples of the apparatus and the method consistent with some aspects of the present disclosure as detailed in the appended claims.

It should be noted that the user information (including but not limited to user device information, user personal information, etc.) and data (including but not limited to data used for analysis, stored data, displayed data, etc.) involved in this disclosure are all information and data authorized by the user or fully authorized by all parties. The collection, use and processing of relevant data must comply with the relevant laws, regulations and standards, and corresponding operation entrances for users to choose to authorize or refuse are provided.

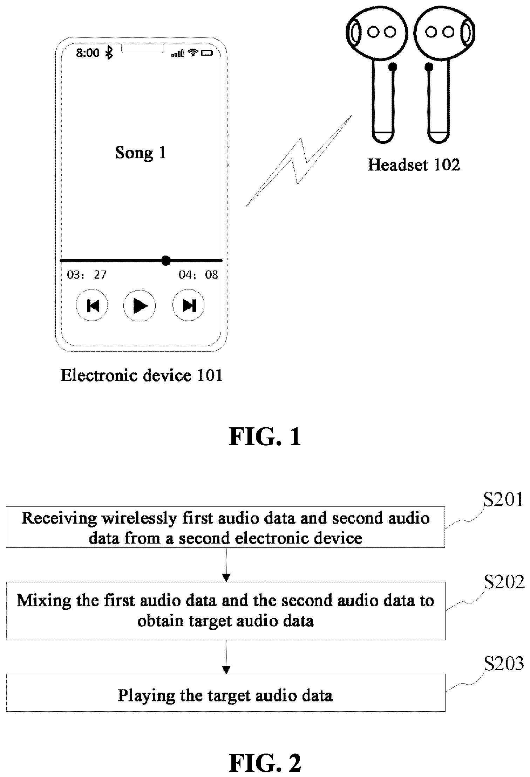

For ease of understanding, the application scenario to which the embodiment of the present disclosure is applicable is described below in conjunction with FIG. 1.

FIG. 1 is a schematic diagram of an application scenario provided by an embodiment of the present disclosure. Referring to FIG. 1, an electronic device 101 and a headset 102 are included. The electronic device 101 may be a mobile terminal. For example, the mobile terminal may be a mobile phone, a tablet computer, etc. The headset 102 may be a Bluetooth headset, a True Wireless Stereo (TWS) headset, an open headset, etc. After the connection between the electronic device 101 and the headset 102 is established via Bluetooth, the electronic device 101 sends the audio data corresponding to the song 1 to the headset 102 in response to the user's operation of playing audio. After receiving the audio data sent by the electronic device 101, the headset 102 may play the song 1 based on the audio data. When playing the song 1, if the electronic device 101 simultaneously runs the application of the voice assistant in the electronic device 101, the headset 102 needs to simultaneously play the audio data corresponding to the song 1 and the audio data corresponding to the voice assistant. At this time, the two pieces of audio data need to be mixed.

In actual application, multimedia audio data and audio data of the voice assistant can be mixed in the electronic device through a preset algorithm to obtain target audio data. And the target audio data is sent to the headset. The headset receives the target audio data and plays it. In the above process, different types of electronic devices use different preset algorithms, and there are differences in the different pieces of target audio data processed by the different preset algorithms. When the different pieces of target audio data processed by the different preset algorithms are played by the headsets, there will be differences in the playback effects. This results in poor effect of processing the audio data.

In an embodiment of the present disclosure, a first electronic device wirelessly receives first audio data and second audio data from a second electronic device. The first electronic device and the second electronic device are wirelessly connected via Bluetooth. The first audio data corresponds to a first audio type, and the second audio data corresponds to a second audio type. The first audio data and the second audio data are mixed to obtain target audio data. The target audio data is played. In the above process, the two types of audio data can be mixed by the first electronic device to obtain the target audio data. By processing and playing by the first electronic device, it is possible to avoid situations where the preset algorithm used by the second electronic device varies and the target audio data processed by different preset algorithms varies, resulting in differences in the playback effects through the first electronic device. Therefore, the effect of processing the audio data is improved.

The method disclosed in the present disclosure is described below through specific embodiments. It should be noted that the following embodiments can exist independently or in combination with each other, and the same or similar contents will not be described repeatedly in different embodiments.

FIG.2 is a schematic flow chart of a method for processing audio data provided by an embodiment of the present disclosure. Referring to FIG. 2, the method may include S201 to S203.

S201: Receiving wirelessly the first audio data and the second audio data from the second electronic device.

The execution subject of the embodiment of the present disclosure may be an electronic device, or a chip, a chip module or an apparatus for processing audio data arranged in the electronic device, etc. The apparatus for processing the audio data may be implemented by software, or by a combination of software and hardware.

The first electronic device is wirelessly connected to the second electronic device via Bluetooth. The first audio data corresponds to the first audio type, and the second audio data corresponds to the second audio type.

The first electronic device includes a wearable device, and the second electronic device includes a mobile terminal. The wearable device includes at least one of a headset, smart glasses, a smart watch, and a smart bracelet. The second electronic device includes at least one of a mobile phone, a laptop computer, and a tablet computer.

The first audio data includes media audio data played by an audio and video player, or call data of the second electronic device for a voice communication. The second audio data includes assistant audio data. The assistant audio data comprises response audio data of the second electronic device to user voice data transmitted by the first electronic device. The assistant audio data includes human voice.

An application of the voice assistant is provided in the first electronic device. The user can wake up the application of the voice assistant in the first electronic device by using preset voice. The voice assistant is waked up and generates a prompt message. After the user obtains the prompt message, the user inputs voice data to the voice assistant. The prompt message can be a ringtone or a voice message.

After receiving the user's voice data, the first electronic device sends the voice data to the second electronic device. The second electronic device determines the response audio data corresponding to the voice data based on the voice data, and sends the response audio data to the first electronic device. The first electronic device receives the response audio data and plays it.

For example, the first electronic device is the headset A, and the second electronic device is the mobile phone A. After the connection between the user's mobile phone A and the headset A is established via Bluetooth, the user wakes up the voice assistant of the headset A by the preset voice A. The voice assistant of the headset A generates the prompt message. And the prompt message of the preset voice A is played by the headset A. After the user obtains the prompt message, the user inputs the voice data "Today's weather" to the voice assistant of the headset A. The voice assistant of the headset A obtains the voice data and sends the voice data to the mobile phone A. The mobile phone A obtains the response audio data corresponding to the voice data from the cloud server. And the mobile phone A sends the response audio data corresponding to the voice data to the headset A. After receiving the response audio data, the headset A plays the response audio data "Today's weather is XX".

The first audio data is transmitted to the first electronic device via at least one of a Hands-free Profile (HFP) protocol, a Headset Profile (HSP) protocol, and an Advanced Audio Distribution Profile (A2DP) protocol. And the second audio data is encoded in an Opus format in the second electronic device.

If the first audio data is the call data for the voice communication, the first audio data is transmitted between the first electronic device and the second electronic device via the HFP protocol or the HSP protocol. If the first audio data is the media audio data played by the video player, the first audio data is transmitted between the first electronic device and the second electronic device via the A2DP protocol.

The user voice collected by the first electronic device is Pulse Code Modulation (PCM) audio data. The first electronic device can encode and compress the collected user voice through Opus to obtain user voice data. The format of the user voice data sent by the first electronic device and received by the second electronic device is OGG format. The second electronic device decompresses the user voice data in the OGG format to obtain PCM audio data. And the response voice corresponding to the user data is obtained based on the PCM audio data. The second electronic device encodes and compresses the response voice through Opus to obtain the second audio data. And the second electronic device sends the second audio data to the first electronic device.

For example, assuming that the voice to be compressed is the voice A. The encoding and the compressing are performed through Opus with 20ms (that is 960 bytes) being one frame, and the compression rate being 5 times. The length of the compressed data is 192, and every 3 frames form a data packet. It can be determined that a compressed frame is 24000*2*20/1000/5=192 bytes. Every 3 frames form a data packet, so it can be determined that the compressed packet obtained by processing is 576 bytes. The compressed packet obtained by the encoding and the compressing through Opus can be specifically shown in the following Table 1.

**Table 1**

| | | | |
|---|---|---|---|
| Before processing through Opus | Data Pack | | |
| | 60ms 2880B | | |
| | Data Frame 1 | Data Frame 2 | Data Frame 3 |
| | 20ms 960B | 20ms 960B | 20ms 960B |
| After processing through Opus | Data Pack | | |
| | 60ms 576B | | |
| | Data Frame 1 | Data Frame 2 | Data Frame 3 |
| | 20ms 192B | 20ms 192B | 20ms 192B |

It should be noted that the method for encoding and compressing the first audio data by the second electronic device may be Opus or other methods, which is not limited in the present disclosure.

S202: Mixing the first audio data and the second audio data to obtain the target audio data.

The first audio data and the second audio data may be mixed to obtain the target audio data in the following manner. The first audio data and the second audio data are processed respectively using adjustment parameters of different sizes. Wherein the adjustment parameters include a preset volume gain and/or a preset frequency gain.

The first audio data and the second audio data may be processed respectively using the adjustment parameters of the different sizes in the following manner. A first preset adjustment parameter corresponding to the first audio data is determined based on a first audio type corresponding to the first audio data. A second preset adjustment parameter corresponding to the second audio data is determined based on a second audio type corresponding to the second audio data. And the first preset adjustment parameter and the second preset adjustment parameter are different in size.

The audio type can be a human voice type, a multimedia type, a call type, etc. The user can determine the adjustment parameter corresponding to each audio type based on the priority of the audio type. For example, if the user expects to hear an audio with the human voice type more clearly, when setting the adjustment parameter, the adjustment parameter for the human voice type (the preset volume gain and/or the preset frequency gain) can be set larger. The adjustment parameter for other audio types (the preset volume gain and/or the preset frequency gain) can be set smaller. In this way, after the first audio data and the second audio data are processed using the adjustment parameters of different sizes, the audio volume for the human voice type in the target audio data is larger, and the audio volume for the non-human voice type is smaller.

A plurality of audio types and preset adjustment parameter corresponding to each audio type may be set in advance, and the plurality of audio types and the preset adjustment parameter corresponding to each audio type may be stored in a preset storage space of the first electronic device.

When mixing the first audio data and the second audio data, the volume and frequency of the first audio data and the volume and frequency of the second audio data can be adjusted based on the preset adjustment parameter set by the user. In this way, the volume of the first audio data and the second audio data in the target audio data obtained by the mixing are different, and the sound effects are different. In this way, the user can hear the audio with higher priority clearly.

For example, according to the above example, it is determined that the first electronic device is the headset A, and the second audio data is "Today's weather is XX". Assuming that the first audio data is the audio data corresponding to the music A. After receiving the first audio data and the second audio data, the headset A processes the first audio data and the second audio data using different adjustment parameters of different sizes. The volume of the first audio data is reduced based on the first preset adjustment parameter, and the volume of the second audio data is increased based on the second preset adjustment parameter, thereby obtaining the target audio data A.

S203: Playing the target audio data.

When the target audio data is played, the volume for the first audio type is different from the volume for the second audio type.

After obtaining the target audio data, the first electronic device can directly play the target audio data through the speaker of the headset.

For example, according to the above example, the target audio data A is determined. The target audio data A includes the audio of "Today's weather is XX" and the audio of the music A. The headset A plays the target audio data A through the speaker, wherein the audio volume for "Today's weather is XX" is louder and the audio volume for the music A is lower. In this way, the user can clearly obtain the response audio data corresponding to the user voice data.

The method for processing the audio data provided by the embodiment of the present disclosure wirelessly receives the first audio data and the second audio data from the second electronic device. The first audio data and the second audio data are mixed to obtain the target audio data. The target audio data is played. In the above process, the two types of audio data can be mixed by the first electronic device to obtain the target audio data. By processing and playing by the first electronic device, it is possible to avoid situations where the preset algorithm used by the second electronic device varies and the target audio data processed by different preset algorithms varies, resulting in differences in the playback effects through the first electronic device. Therefore, the effect of processing the audio data is improved.

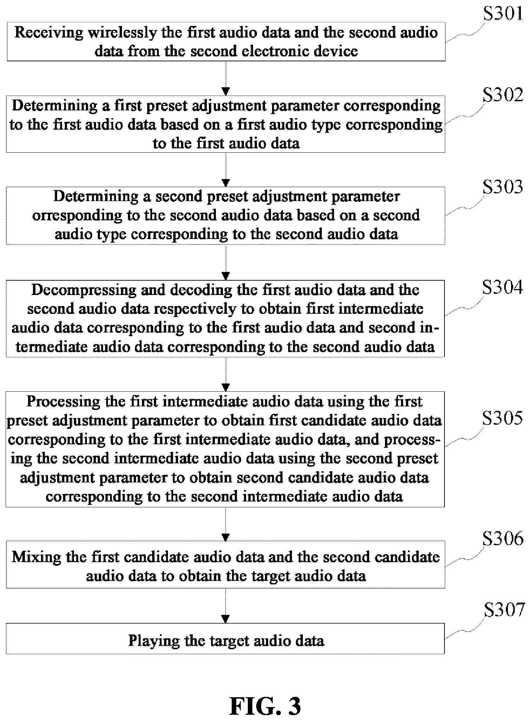

Based on any of the above embodiments, the details of processing the audio data are described below in conjunction with FIG. 3.

FIG. 3 is a schematic flow chart of another method for processing audio data provided by an embodiment of the present disclosure. Referring to FIG. 3, the method includes S301-S307.

S301: Receiving wirelessly the first audio data and the second audio data from the second electronic device.

It should be noted that the execution steps of S301 may refer to S201 and will not be described in detail here.

S302: Determining a first preset adjustment parameter corresponding to the first audio data based on a first audio type corresponding to the first audio data.

For example, assuming that the first electronic device is the headset B, the first audio data received by the headset B is the audio data of the video B. And the second audio data is the response audio data of the voice assistant of the headset B. The headset B determines that the first audio type of the first audio data is the multimedia type. And the first preset adjustment parameter corresponding to the first audio data is obtained in the preset storage space of the headset B, the first preset adjustment parameters includes the preset volume gain of 0.5 and the preset frequency gain of 0.8.

S303: Determining a second preset adjustment parameter corresponding to the second audio data based on a second audio type corresponding to the second audio data.

The first preset adjustment parameter and the second preset adjustment parameter are different in size.

For example, according to the above example, the second audio data is determined to be the response audio data of the voice assistant of the headset B. The headset B determines that the second audio type of the second audio data is the human voice type. And the second preset adjustment parameter corresponding to the second audio data is obtained in the preset storage space of the headset B. The second preset adjustment parameter includes the preset volume gain of 1.2.

S304: Decompressing and decoding the first audio data and the second audio data respectively to obtain first intermediate audio data corresponding to the first audio data and second intermediate audio data corresponding to the second audio data.

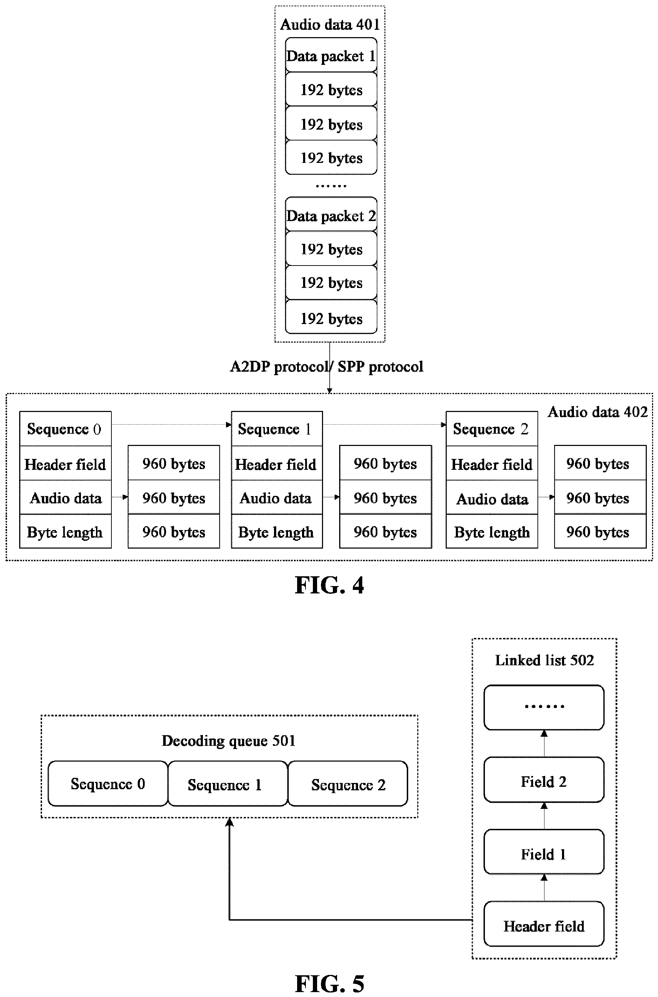

In the following, the process of decompressing the audio data is described in conjunction with FIG. 4. FIG. 4 is a schematic diagram of a process of decompressing audio data provided by an embodiment of the present disclosure. Referring to FIG. 4, the audio data 401 and the audio data 402 are included. The audio data 401 may be the first audio data sent by the second electronic device to the first electronic device via the A2DP protocol. Alternatively, the audio data 401 can be the second audio data sent by the second electronic device to the first electronic device via the Serial Port Profile (SPP) protocol implemented by Bluetooth. The audio data 401 includes multiple data packets, each of which is compressed using Opus. After receiving the audio data 401, the first electronic device decompresses the audio data 401 to obtain the audio data 402. In the decompressed audio data 402, each sequence includes 960 bytes of audio data.

The SPP protocol is a Bluetooth private protocol. Users can customize the specific content of the SPP protocol based on the usage scenario. In the embodiment of the present disclosure, the audio data corresponding to the application of the voice assistant in the first electronic device can be transmitted through the SPP protocol.

For example, a wake-up algorithm is provided in the voice assistant of the first electronic device, and the user voice data is obtained through the wake-up algorithm. When it is determined that the user's voice is a preset voice, the user voice data and at least one operation instruction can be sent to the second electronic device through the artificial intelligence timing control in the SPP protocol. After receiving the user voice data and at least one operation instruction, the second electronic device sends the user voice data to the cloud server. The cloud server obtains the corresponding response audio data based on the user voice data. After determining the response audio data, the cloud server sends a preparation instruction to the second electronic device. After receiving the preparation instruction, the second electronic device sends the preparation instruction to the first electronic device. In this way, the second electronic device and the first electronic device perform a preparation operation (for example, startup of the player, allocation of the memory, etc.) to receive the response audio data. The cloud server sends the response audio data to the second electronic device through the SSP protocol, and the second electronic device sends the response audio data to the first electronic device through the SSP protocol.

In the following, the process of decoding the audio data is described in conjunction with FIG. 5. FIG. 5 is a schematic diagram of a process of decoding audio data provided by an embodiment of the present disclosure. Referring to FIG. 5, a decoding queue 501 and a linked list 502 are included. The decompressed audio data shown in FIG. 4 is cached in the linked list 402. In response to the data preparation instruction from the decoding thread in the first electronic device, the header field is obtained from the list by the decoding thread at one time for decoding through opus, to obtain the decoded audio data. The decoded audio data is cached in the decoding queue 501. The audio data corresponding to the three data packets after decompression can be cached in the queue 501. When the decompressed audio data is cached in the linked list 502, if twenty-five data packets are cached, the speed of decoding cannot be accurately controlled. If the speed of decoding is fast, it will cause packet overflow and frame loss. If the speed of decoding is slow, it will cause jamming and asynchronization. Therefore, the cache quantity can be set to ten data packets.

S305: Processing the first intermediate audio data using the first preset adjustment parameter to obtain first candidate audio data corresponding to the first intermediate audio data, and processing the second intermediate audio data using the second preset adjustment parameter to obtain second candidate audio data corresponding to the second intermediate audio data.

For any intermediate audio data of the first intermediate audio data and the second intermediate audio data, if the preset adjustment parameter corresponding to the intermediate audio data includes a preset volume gain, the intermediate audio data can be processed using the preset adjustment parameters in the following manner. The volume corresponding to the intermediate audio data is determined. And the volume of the intermediate audio data is processed using the preset volume gain to obtain the candidate audio data corresponding to the intermediate audio data.

For any intermediate audio data of the first intermediate audio data and the second intermediate audio data, if the preset adjustment parameter corresponding to the intermediate audio data includes a preset frequency gain, the intermediate audio data can be processed using the preset adjustment parameter in the following manner. The frequency corresponding to the intermediate audio data is determined. And the frequency of the intermediate audio data is processed using the preset frequency gain to obtain the candidate audio data corresponding to the intermediate audio data.

For any intermediate audio data of the first intermediate audio data and the second intermediate audio data, if the preset adjustment parameter corresponding to the intermediate audio data includes the preset volume gain and the preset frequency gain, the intermediate audio data can be processed using the preset adjustment parameter in the following manner. The volume and the frequency corresponding to the intermediate audio data are determined. The volume of the intermediate audio data is processed using the preset volume gain, and the frequency of the intermediate audio data is processed using the preset frequency gain, to obtain the candidate audio data corresponding to the intermediate audio data.

When the volume of the intermediate audio data is processed using the preset volume gain, the volume of the intermediate audio data and the preset volume gain may be added or multiplied, which is not limited in the present disclosure.

When the frequency of the intermediate audio data is processed using the preset frequency gain, the frequency of the intermediate audio data and the preset frequency gain may be added or multiplied, which is not limited in the present disclosure.

For example, according to the above example, the first preset adjustment parameter includes the preset volume gain of 0.5 and the preset frequency gain of 0.8. And the second preset adjustment parameter includes the preset volume gain of 1.2. The volume and the frequency of each intermediate audio data may be specifically determined as shown in Table 2.

**Table 2**

| Intermediate audio data | Volume | Frequency |
|---|---|---|
| First intermediate audio data | a1 | f 1 |
| Second intermediate audio data | a2 | f 2 |

For the first intermediate audio data, according to Table 2, the volume a1 of the first intermediate audio data is multiplied by the preset volume gain of 0.5, and the frequency f1 of the first intermediate audio data is multiplied by the preset frequency gain of 0.8 to obtain the first candidate audio data A1. The volume of the first candidate audio data A1 is 0.5 * a1, and the frequency of the first candidate audio data A1 is 0.8 * f1. For the second intermediate audio data, as shown in Table 2, the volume a2 of the second intermediate audio data is multiplied by the preset volume gain of 1.2 to obtain the second candidate audio data A2. The volume of the second candidate audio data A2 is 1.2 * a2.

S306: Mixing the first candidate audio data and the second candidate audio data to obtain the target audio data.

The first candidate audio data and the second candidate audio data can be mixed to obtain the target audio data in the following manner. A preset sampling rate is obtained. The first candidate audio data and the second candidate audio data are sampled respectively based on the preset sampling rate to obtain M pieces of sampled audio data corresponding to the first candidate audio data and M pieces of sampled audio data corresponding to the second candidate audio data. Wherein M is an integer greater than or equal to 1. The M pieces of sampled audio data corresponding to the first candidate audio data and the M pieces of sampled audio data corresponding to the second candidate audio data are mixed to obtain the target audio data.

The preset sampling rate can be set in advance and stored in the preset storage space of the first electronic device. The preset sampling rate is greater than the first sampling rate for generating the first audio data and the second sampling rate for generating the second audio data. The preset sampling rate can be 384K. After processing by the preset sampling rate, the sampling rate for the sampled audio data corresponding to each candidate audio data is the same. In this way, the timing of mixing the M pieces of sampled audio data is the same.

The M pieces of sampled audio data corresponding to the first candidate audio data and the M pieces of sampled audio data corresponding to the second candidate audio data can be mixed to obtain the target audio data in the following manner. M groups of audio data are determined. The i-th group of audio data includes the i-th piece of sampled audio data in the first candidate audio data and the i-th piece of sampled audio data in the second candidate audio data. The respective pieces of sampled audio data in each group of audio data is mixed to obtain M pieces of mixed audio data. And it is determined that the target audio data includes the M pieces of mixed audio data.

For example, based on the preset sampling rate, the first candidate audio data is sampled to obtain 64 pieces of sampled audio data corresponding to the first candidate audio data, wherein the 64 pieces of sampled audio data include sampled data A1 to A64. Based on the preset sampling rate, the second candidate audio data is sampled to obtain 64 pieces of sampled audio data corresponding to the second candidate audio data, wherein the 64 pieces of sampled audio data include sampled data B1 to B64. The 64 groups of the audio data can be determined as shown in Table 3.

**Table 3**

| Audio Data | First Candidate Audio | Second Candidate Audio |
|---|---|---|
| First group of audio data | First sampled audio data | First sampled audio data |
| Second group of audio data | Second sampled audio data | Second sampled audio data |
| ... | ... | ... |
| 64th group of audio data | 64th sampled audio data | 64th sampled audio data |

The respective pieces of sampled audio data in each group of audio data shown in Table 3 are mixed to obtain 64 pieces of mixed audio data. It is determined that the target audio data includes 64 pieces of mixed audio data.

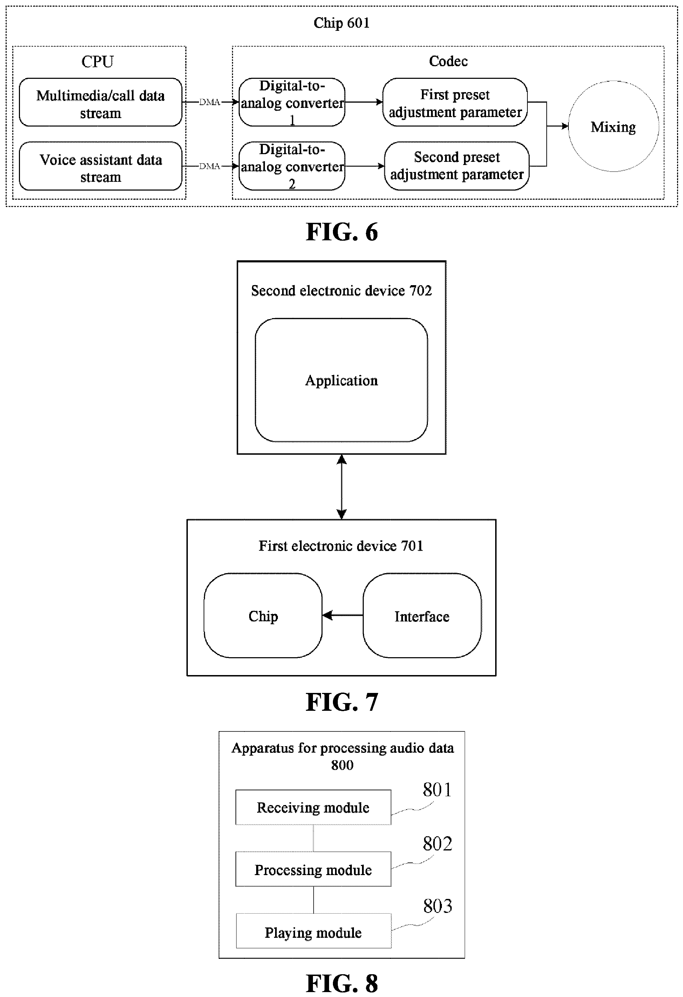

The mixing can be implemented inside the chip through the codec capability of the chip in the first electronic device. In the following, the process of mixing is described in conjunction with FIG. 6. FIG. 6 is a schematic diagram of the process of the mixing provided by the embodiment of the present disclosure. Referring to FIG. 6, a chip 601 is included. The chip 601 is set in the first electronic device. And the chip 601 includes a Central Processing Unit and a codec. The multimedia/call data stream of the CPU is used to process the first audio data, and the voice assistant data stream of the CPU is used to process the second audio data. The codec of the chip 601 obtains the first intermediate audio data and the second intermediate audio data through Direct Memory Access (DMA). The codec of the chip 601 processes the first intermediate audio data through the digital-to-analog converter 1 and the first preset adjustment parameter to obtain the first candidate audio data. And the second intermediate audio data is processed through the digital-to-analog converter 2 and the second preset adjustment parameter to obtain the second candidate audio data. The codec of the chip 601 mixes the first candidate audio data and the second candidate audio data to obtain the target audio data. The target audio data is sent to the player of the first electronic device so that the player plays the target audio data.

S307: Playing the target audio data.

If the first electronic device is a TWS headset, when playing the target audio data and determining that the primary headset and the secondary headset need to play simultaneously, the two headsets need to be synchronized to avoid the target audio data played by the two headsets being out of sync, which can result in a poor user experience.

The two headsets can be synchronized by event synchronization. The headsets can be synchronized by the following method. After generating the target audio data, a target time is determined based on the Bluetooth clock. A target data frame corresponding to the target time in the target audio data is determined. When the current time is the target time, the primary headset and the secondary headset play the target data frame simultaneously.

After the headsets play the target data frames simultaneously, the respective data frames in the target audio data continue to be played sequentially.

For example, after determining the target audio data, the headset determines that the target time is time 2, and the current time is time 1. The headset determines that the target data frame corresponding to time 2 is data frame 1 in the target audio data. Then, when the current time is time 2, the primary headset and the secondary headset of the headsets synchronously play the data frame 1.

The method for processing the audio data provided by the embodiment of the present disclosure wirelessly receives the first audio data and the second audio data from the second electronic device. Based on the first audio type corresponding to the first audio data, the first preset adjustment parameter corresponding to the first audio data is determined. Based on the second audio type corresponding to the second audio data, the second preset adjustment parameter corresponding to the second audio data is determined. The first audio data and the second audio data are respectively decompressed and decoded to obtain the first intermediate audio data corresponding to the first audio data and the second intermediate audio data corresponding to the second audio data. The first intermediate audio data is processed using the first preset adjustment parameter to obtain the first candidate audio data corresponding to the first intermediate audio data, and the second intermediate audio data is processed using the second preset adjustment parameter to obtain the second candidate audio data corresponding to the second intermediate audio data. The first candidate audio data and the second candidate audio data are mixed to obtain the target audio data. The target audio data is played. In the above process, the two types of audio data can be mixed by the first electronic device to obtain the target audio data. By processing and playing by the first electronic device, it is possible to avoid situations where the preset algorithm used by the second electronic device varies and the target audio data processed by different preset algorithms varies, resulting in differences in the playback effects through the first electronic device. Therefore, the effect of processing the audio data is improved.

Based on any of the above embodiments, the process of processing the audio data is illustrated below with reference to FIG. 7.

FIG. 7 is a schematic diagram of the process of processing the audio data provided by an embodiment of the present disclosure. Referring to FIG. 7, a first electronic device 701 and a second electronic device 702 are included. The first electronic device 701 may be a wearable device. For example, the first electronic device 701 may be a headset, smart glasses, a smart watch, a smart bracelet, etc. A chip and an interface are provided in the first electronic device 701, and the interface is used for data transmission. A voice assistant is also provided in the first electronic device 701. The second electronic device 702 may be a mobile terminal. For example, the second electronic device 702 may be a mobile phone, a laptop computer, a tablet computer, etc.

After a Bluetooth connection is established between the first electronic device 701 and the second electronic device 702, the second electronic device 702, in response to a play instruction input by the user, plays song 2 through the first electronic device 701. And after the voice assistant of the first electronic device 701 obtains the user voice data, it sends the user voice data to the second electronic device 702 through the SPP protocol. The second electronic device 702 obtains the response audio data corresponding to the user voice data from the cloud server. The second electronic device 702 sends the response audio data to the first electronic device 701 through the SSP protocol. And the audio data corresponding to song 2 is sent to the first electronic device 701 through the A2DP protocol.

After the first electronic device 701 receives the audio data corresponding to song 2 and the response audio data, it determines the audio type and the preset adjustment parameter corresponding to each audio data, which can be specifically shown in Table 4.

**Table 4**

| Audio Data | Audio Type | Preset adjustment parameter |
|---|---|---|
| Audio data corresponding to song 2 | Multimedia Type | Volume Gain 1 |
| Response audio data | Human voice Type | Volume Gain 2 |

For the audio data corresponding to song 2, the chip of the first electronic device 701 processes the audio data corresponding to song 2 using the volume gain 1 shown in Table 4 to obtain the candidate audio data 1 corresponding to the audio data corresponding to song 2. For the response audio data, the chip of the first electronic device 701 processes the response audio data using the volume gain 2 shown in Table 4 to obtain the candidate audio data 2 corresponding to the response audio data. The chip of the first electronic device 701 obtains a preset sampling rate. And based on the preset sampling rate, the candidate audio data 1 and the candidate audio data 2 are sampled respectively to obtain 128 pieces of sampled audio data corresponding to the candidate audio data 1 and 128 pieces of sampled audio data corresponding to the candidate audio data 2. The chip of the first electronic device 701 mixes the 128 pieces of sampled audio data corresponding to the candidate audio data 1 and the 128 pieces of sampled audio data corresponding to the candidate audio data 2 to obtain the target audio data. The chip of the first electronic device 701 sends the target audio data to the speaker of the first electronic device 701, and the target audio data is played by the speaker.

The process of processing the audio data provided by the embodiment of the present disclosure wirelessly receives the first audio data and the second audio data from the second electronic device. Based on the first audio type corresponding to the first audio data, the first preset adjustment parameter corresponding to the first audio data is determined. Based on the second audio type corresponding to the second audio data, the second preset adjustment parameter corresponding to the second audio data is determined. The first audio data and the second audio data are respectively decompressed and decoded to obtain the first intermediate audio data corresponding to the first audio data and the second intermediate audio data corresponding to the second audio data. The first intermediate audio data is processed using the first preset adjustment parameter to obtain the first candidate audio data corresponding to the first intermediate audio data, and the second intermediate audio data is processed using the second preset adjustment parameter to obtain the second candidate audio data corresponding to the second intermediate audio data. The first candidate audio data and the second candidate audio data are mixed to obtain the target audio data. The target audio data is played. In the above process, the two types of audio data can be mixed by the first electronic device to obtain the target audio data. By processing and playing by the first electronic device, it is possible to avoid situations where the preset algorithm used by the second electronic device varies and the target audio data processed by different preset algorithms varies, resulting in differences in the playback effects through the first electronic device. Therefore, the effect of processing the audio data is improved.

FIG. 8 is a structural block diagram of an apparatus for processing audio data provided by an embodiment of the present disclosure. Referring to FIG. 8, the apparatus 800 for processing audio data includes a receiving module 801, a processing module 802 and a playing module 803.

The receiving module 801 is configured to wirelessly receive first audio data and second audio data from a second electronic device. Wherein the second electronic device and the apparatus for processing the audio data are wirelessly connected via Bluetooth, the first audio data corresponds to a first audio type, and the second audio data corresponds to a second audio type.

The processing module 802 is configured to mix the first audio data and the second audio data to obtain target audio data.

The playing module 803 is configured to play the target audio data.

According to one or more embodiments of the present disclosure, the first electronic device comprises a wearable device and the second electronic device comprises a mobile terminal.

According to one or more embodiments of the present disclosure, the wearable device comprises at least one of a headset, smart glasses, a smart watch, and a smart bracelet; and the second electronic device comprises at least one of a mobile phone, a laptop computer, and a tablet computer.

According to one or more embodiments of the present disclosure, the first audio data comprises media audio data played by an audio and video player or call data of the second electronic device for a voice communication; and the second audio data comprises assistant audio data, and wherein the assistant audio data comprises response audio data of the second electronic device to user voice data transmitted by the first electronic device.

According to one or more embodiments of the present disclosure, the first audio data is transmitted to the first electronic device via at least one of a Hands-free Profile (HFP) protocol, a Headset Profile (HSP) protocol, and an Advanced Audio Distribution Profile (A2DP) protocol; and the second audio data is encoded in an Opus format in the second electronic device.

According to one or more embodiments of the present disclosure, the assistant audio data comprises human voice.

According to one or more embodiments of the present disclosure, in response to determining that the target audio data is played, volume for the first audio type is different from volume for the second audio type.

According to one or more embodiments of the present disclosure, the processing module 803 is configured to perform the following: processing the first audio data and the second audio data using adjustment parameters of different sizes respectively, wherein the adjustment parameters comprise a preset volume gain and/or a preset frequency gain.

According to one or more embodiments of the present disclosure, the processing module 803 is configured to perform the following: determining a first preset adjustment parameter corresponding to the first audio data based on the first audio type corresponding to the first audio data; and determining a second preset adjustment parameter corresponding to the second audio data based on the second audio type corresponding to the second audio data, and the first preset adjustment parameter and the second preset adjustment parameter are different in size

According to one or more embodiments of the present disclosure, the processing module 803 is configured to perform the following: decompressing and decoding the first audio data and the second audio data respectively to obtain first intermediate audio data corresponding to the first audio data and second intermediate audio data corresponding to the second audio data; processing the first intermediate audio data using the first preset adjustment parameter to obtain first candidate audio data corresponding to the first intermediate audio data, and processing the second intermediate audio data using the second preset adjustment parameter to obtain second candidate audio data corresponding to the second intermediate audio data; and mixing the first candidate audio data and the second candidate audio data to obtain the target audio data.

According to one or more embodiments of the present disclosure, the processing module 803 is configured to perform the following: determining volume corresponding to the intermediate audio data; and processing the volume of the intermediate audio data using the preset volume gain to obtain candidate audio data corresponding to the intermediate audio data.

According to one or more embodiments of the present disclosure, the processing module 803 is configured to perform the following: determining a frequency corresponding to the intermediate audio data; and processing the frequency of the intermediate audio data using the preset frequency gain to obtain candidate audio data corresponding to the intermediate audio data.

According to one or more embodiments of the present disclosure, the processing module 803 is configured to perform the following: determining volume and a frequency corresponding to the intermediate audio data; and processing the volume of the intermediate audio data using the preset volume gain, and processing the frequency of the intermediate audio data using the preset frequency gain to obtain candidate audio data corresponding to the intermediate audio data.

According to one or more embodiments of the present disclosure, the processing module 803 is configured to perform the following: acquiring a preset sampling rate; sampling, based on the preset sampling rate, the first candidate audio data and the second candidate audio data respectively to obtain M pieces of sampled audio data corresponding to the first candidate audio data and M pieces of sampled audio data corresponding to the second candidate audio data, wherein M is an integer greater than or equal to 1; and mixing the M pieces of sampled audio data corresponding to the first candidate audio data and the M pieces of sampled audio data corresponding to the second candidate audio data to obtain the target audio data.

According to one or more embodiments of the present disclosure, the processing module 803 is configured to perform the following: determining M groups of audio data, wherein an i-th group of audio data comprises an i-th piece of sampled audio data in the first candidate audio data and an i-th piece of sampled audio data in the second candidate audio data; mixing respective pieces of sampled audio data in each group of the audio data to obtain M pieces of mixed audio data; and determining that the target audio data comprises the M pieces of mixed audio data.

The apparatus for processing the audio data provided in the embodiment of the present disclosure can be used to execute the technical solution of the above-mentioned method embodiment. Its implementation principle and technical effect are similar, and this embodiment will not be repeated here.

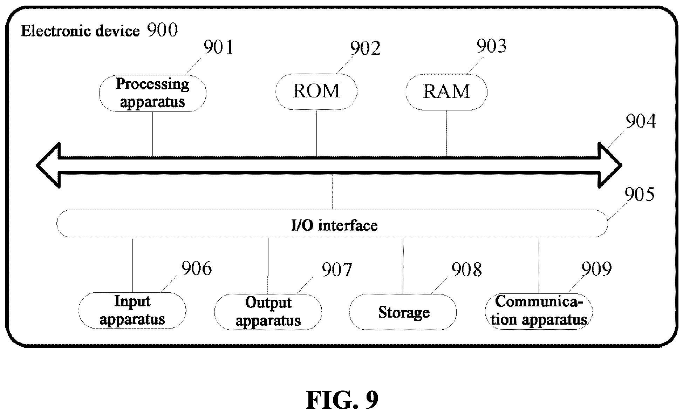

FIG. 9 is a structural block diagram of an electronic device provided in an embodiment of the present disclosure. Referring to FIG. 9, which shows a structural block diagram of an electronic device 900 suitable for implementing the embodiment of the present disclosure. The electronic device 900 includes a wearable device. The electronic device may include but is not limited to mobile terminals such as mobile phones, laptop computers, digital broadcast receivers, Personal Digital Assistants (PDAs), Portable Android Devices (PADs), Portable Media Players (PMPs), vehicle-mounted terminals (such as vehicle-mounted navigation terminals), etc., and fixed terminals such as digital TVs, desktop computers, etc. The electronic device shown in FIG. 13 is only an example and should not impose any limitations on the functions and scope of use of the embodiments of the present disclosure.

As shown in FIG. 9, the electronic device 900 may include a processing apparatus (e.g., a central processing unit, a graphics processing unit, etc.) 901, which may perform various appropriate actions and processes according to a program stored in a Read Only Memory (ROM) 902 or a program loaded from a Storage 908 to a Random Access Memory (RAM) 903. Various programs and data required for the operation of the electronic device 900 are also stored in the RAM 903. The processing apparatus 901, the ROM 902, and the RAM 903 are connected to each other via a bus 904. An input/output (I/O) interface 905 is also connected to the bus 904.

Typically, the following apparatus may be connected to the I/O interface 905: input apparatus 906 including, for example, a touch screen, a touchpad, a keyboard, a mouse, a camera, a microphone, an accelerometer, a gyroscope, etc.; output apparatus 907 including, for example, a Liquid Crystal Display (LCD), a speaker, a vibrator, etc.; Storage 908 including, for example, a magnetic tape, a hard disk, etc.; and communication apparatus 909. The communication apparatus 909 may allow the electronic device 900 to communicate with other devices wirelessly or by wire to exchange data. Although FIG. 11 shows the electronic device 900 with various apparatus, it should be understood that it is not required to implement or have all the apparatus shown. More or fewer apparatus may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a computer-readable medium, and the computer program contains program code for executing the method shown in the flowchart. In such an embodiment, the computer program can be downloaded and installed from a network by a communication apparatus 909, or installed from a Storage 908, or installed from a ROM 902. When the computer program is executed by the processing apparatus 901, the above-mentioned functions defined in the method of the embodiment of the present disclosure are executed.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. Computer readable signal media may also be any computer readable medium other than computer readable storage media, which may send, propagate or transmit a program for use by or in combination with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. The one or more programs, when executed by the electronic device, cause the electronic device to execute the method shown in the above embodiment.

The embodiment of the present disclosure provides computer-readable storage medium storing computer-executable instructions. The computer-executable instructions, when executed by a processor, implement the various methods that may be involved in the above embodiment.

The embodiment of the present disclosure provides a computer program product including a computer program. The computer program, when executed by a processor, implements the various methods that may be involved in the above embodiment.

Computer program code for performing the operations disclosed herein can be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer via any type of network, including a Local Area Network (LAN) or a Wide Area Network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each box in the flow chart or block diagram can represent a module, a program segment or a part of a code, and the module, the program segment or a part of the code contains one or more executable instructions for realizing the specified logical function. It should also be noted that in some implementations as replacements, the functions marked in the box can also occur in an order different from that marked in the accompanying drawings. For example, two boxes represented in succession can actually be executed substantially in parallel, and they can sometimes be executed in the opposite order, depending on the functions involved. It should also be noted that each box in the block diagram and/or flow chart, and the combination of the boxes in the block diagram and/or flow chart can be implemented with a dedicated hardware-based system that performs a specified function or operation, or can be implemented with a combination of dedicated hardware and computer instructions.

The unit involved in the embodiments described in the present disclosure may be implemented by software or hardware. The name of a unit does not limit the unit itself in some cases. For example, the first acquiring unit may also be described as a "unit for acquiring at least two Internet Protocol addresses".

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that may contain or store a program for use by or in conjunction with an instruction execution system, apparatus, or device. A machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. A more specific example of a machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

It should be noted that the modifications of "one" and "plurality" mentioned in the present disclosure are illustrative rather than restrictive, and those skilled in the art should understand that unless otherwise clearly indicated in the context, the above should be understood as "one or more".

The name of the messages or information exchanged between multiple apparatus in the embodiments of the present disclosure is only used for illustrative purposes and are not used to limit the scope of these messages or information.

It is understandable that before using the technical solutions disclosed in the embodiments of the present disclosure, the types, scope of use, usage scenarios, etc. of the personal information involved in the present disclosure should be informed to the user and the user's authorization should be obtained in an appropriate manner in accordance with relevant laws and regulations.

For example, in response to receiving an active request from a user, a prompt message is sent to the user to clearly prompt the user that the operation requested to be performed will require obtaining and using the user's personal information. Thus, based on the prompt message, the user can independently choose whether to provide personal information to software or hardware such as an electronic device, application, server or storage medium that performs the operation of the technical solution of the present disclosure. As an optional but non-limiting implementation, in response to receiving the active request from the user, the method of sending the prompt message to the user can be, for example, a pop-up window, and the prompt message can be presented in text in the pop-up window. In addition, the pop-up window can also carry a selection control for the user to choose "agree" or "disagree" to provide personal information to the electronic device.

It is understandable that the above notification and the process of obtaining user authorization are merely illustrative and do not constitute a limitation on the implementation of the present disclosure. Other methods that meet the relevant laws and regulations may also be applied to the implementation of the present disclosure.

It is understood that the data involved in this technical solution (including but not limited to the data itself, the acquisition or use of the data) shall comply with the requirements of relevant laws and regulations. The data may include information, parameters and messages, such as indication information for switching the stream.

In a first aspect, an embodiment of the present disclosure provides a method for processing audio data which is applied in a first electronic device. The method comprises: receiving wirelessly first audio data and second audio data from a second electronic device, wherein the first electronic device and the second electronic device are wirelessly connected via Bluetooth, the first audio data corresponds to a first audio type, and the second audio data corresponds to a second audio type; mixing the first audio data and the second audio data to obtain target audio data; and playing the target audio data.

According to one or more embodiments of the present disclosure, the first electronic device comprises a wearable device and the second electronic device comprises a mobile terminal.

According to one or more embodiments of the present disclosure, the wearable device comprises at least one of a headset, smart glasses, a smart watch, and a smart bracelet; and the second electronic device comprises at least one of a mobile phone, a laptop computer, and a tablet computer.

According to one or more embodiments of the present disclosure, the first audio data comprises media audio data played by an audio and video player or call data of the second electronic device for a voice communication; and the second audio data comprises assistant audio data, and the assistant audio data comprises response audio data of the second electronic device to user voice data transmitted by the first electronic device.

According to one or more embodiments of the present disclosure, the first audio data is transmitted to the first electronic device via at least one of a Hands-free Profile (HFP) protocol, a Headset Profile (HSP) protocol, and an Advanced Audio Distribution Profile (A2DP) protocol; and the second audio data is encoded in an Opus format in the second electronic device.

According to one or more embodiments of the present disclosure, the assistant audio data comprises human voice.

According to one or more embodiments of the present disclosure, in response to determining that the target audio data is played, volume for the first audio type is different from volume for the second audio type.

According to one or more embodiments of the present disclosure, the mixing the first audio data and the second audio data to obtain the target audio data comprises: processing the first audio data and the second audio data using adjustment parameters of different sizes respectively, wherein the adjustment parameters comprise a preset volume gain and/or a preset frequency gain.

According to one or more embodiments of the present disclosure, the processing the first audio data and the second audio data using the adjustment parameters of different sizes respectively comprises: determining a first preset adjustment parameter corresponding to the first audio data based on the first audio type corresponding to the first audio data; and determining a second preset adjustment parameter corresponding to the second audio data based on the second audio type corresponding to the second audio data, wherein the first preset adjustment parameter and the second preset adjustment parameter are different in size.

According to one or more embodiments of the present disclosure, the processing the first audio data and the second audio data using the adjustment parameters of different sizes respectively comprises: decompressing and decoding the first audio data and the second audio data respectively to obtain first intermediate audio data corresponding to the first audio data and second intermediate audio data corresponding to the second audio data; processing the first intermediate audio data using the first preset adjustment parameter to obtain first candidate audio data corresponding to the first intermediate audio data, and processing the second intermediate audio data using the second preset adjustment parameter to obtain second candidate audio data corresponding to the second intermediate audio data; and mixing the first candidate audio data and the second candidate audio data to obtain the target audio data.

According to one or more embodiments of the present disclosure, for any intermediate audio data of the first intermediate audio data and the second intermediate audio data, the preset adjustment parameter corresponding to the intermediate audio data comprises the preset volume gain, and wherein processing the intermediate audio data using the preset adjustment parameter comprises: determining volume corresponding to the intermediate audio data; and processing the volume of the intermediate audio data using the preset volume gain to obtain candidate audio data corresponding to the intermediate audio data.

According to one or more embodiments of the present disclosure, for any intermediate audio data of the first intermediate audio data and the second intermediate audio data, the preset adjustment parameter corresponding to the intermediate audio data comprises the preset frequency gain, and wherein processing the intermediate audio data using the preset adjustment parameter comprises: determining a frequency corresponding to the intermediate audio data; and processing the frequency of the intermediate audio data using the preset frequency gain to obtain candidate audio data corresponding to the intermediate audio data.

According to one or more embodiments of the present disclosure, for any intermediate audio data of the first intermediate audio data and the second intermediate audio data, the preset adjustment parameter corresponding to the intermediate audio data comprises the preset volume gain and the preset frequency gain, and wherein processing the intermediate audio data using the preset adjustment parameter comprises: determining volume and a frequency corresponding to the intermediate audio data; and processing the volume of the intermediate audio data using the preset volume gain, and processing the frequency of the intermediate audio data using the preset frequency gain to obtain candidate audio data corresponding to the intermediate audio data.

According to one or more embodiments of the present disclosure, mixing the first candidate audio data and the second candidate audio data to obtain the target audio data comprises: acquiring a preset sampling rate; sampling, based on the preset sampling rate, the first candidate audio data and the second candidate audio data respectively to obtain M pieces of sampled audio data corresponding to the first candidate audio data and M pieces of sampled audio data corresponding to the second candidate audio data, wherein M is an integer greater than or equal to 1; and mixing the M pieces of sampled audio data corresponding to the first candidate audio data and the M pieces of sampled audio data corresponding to the second candidate audio data to obtain the target audio data.

According to one or more embodiments of the present disclosure, mixing the M pieces of sampled audio data corresponding to the first candidate audio data and the M pieces of sampled audio data corresponding to the second candidate audio data to obtain the target audio data comprises: determining M groups of audio data, wherein an i-th group of audio data comprises an i-th piece of sampled audio data in the first candidate audio data and an i-th piece of sampled audio data in the second candidate audio data; mixing respective pieces of sampled audio data in each group of the audio data to obtain M pieces of mixed audio data; and determining that the target audio data comprises the M pieces of mixed audio data.

In a second aspect, an embodiment of the present disclosure provides the apparatus for processing audio data. The apparatus for processing the audio data includes the following modules. The receiving module is configured to wirelessly receive first audio data and second audio data from a second electronic device. Wherein the second electronic device and the apparatus for processing the audio data are wirelessly connected via Bluetooth, the first audio data corresponds to a first audio type, and the second audio data corresponds to a second audio type. The processing module is configured to mix the first audio data and the second audio data to obtain target audio data. The playing module is configured to play the target audio data.

According to one or more embodiments of the present disclosure, the first electronic device comprises a wearable device and the second electronic device comprises a mobile terminal.

According to one or more embodiments of the present disclosure, the wearable device comprises at least one of a headset, smart glasses, a smart watch, and a smart bracelet; and the second electronic device comprises at least one of a mobile phone, a laptop computer, and a tablet computer.

According to one or more embodiments of the present disclosure, the first audio data comprises media audio data played by an audio and video player or call data of the second electronic device for a voice communication; and the second audio data comprises assistant audio data, and wherein the assistant audio data comprises response audio data of the second electronic device to user voice data transmitted by the first electronic device.

According to one or more embodiments of the present disclosure, the first audio data is transmitted to the first electronic device via at least one of a Hands-free Profile (HFP) protocol, a Headset Profile (HSP) protocol, and an Advanced Audio Distribution Profile (A2DP) protocol; and the second audio data is encoded in an Opus format in the second electronic device.

According to one or more embodiments of the present disclosure, the assistant audio data comprises human voice.

According to one or more embodiments of the present disclosure, in response to determining that the target audio data is played, volume for the first audio type is different from volume for the second audio type.

According to one or more embodiments of the present disclosure, the processing module is configured to perform the following: processing the first audio data and the second audio data using adjustment parameters of different sizes respectively, wherein the adjustment parameters comprise a preset volume gain and/or a preset frequency gain.

According to one or more embodiments of the present disclosure, the processing module is configured to perform the following: determining a first preset adjustment parameter corresponding to the first audio data based on the first audio type corresponding to the first audio data; and determining a second preset adjustment parameter corresponding to the second audio data based on the second audio type corresponding to the second audio data, and the first preset adjustment parameter and the second preset adjustment parameter are different in size

According to one or more embodiments of the present disclosure, the processing module is configured to perform the following: decompressing and decoding the first audio data and the second audio data respectively to obtain first intermediate audio data corresponding to the first audio data and second intermediate audio data corresponding to the second audio data; processing the first intermediate audio data using the first preset adjustment parameter to obtain first candidate audio data corresponding to the first intermediate audio data, and processing the second intermediate audio data using the second preset adjustment parameter to obtain second candidate audio data corresponding to the second intermediate audio data; and mixing the first candidate audio data and the second candidate audio data to obtain the target audio data.

According to one or more embodiments of the present disclosure, the processing module is configured to perform the following: determining volume corresponding to the intermediate audio data; and processing the volume of the intermediate audio data using the preset volume gain to obtain candidate audio data corresponding to the intermediate audio data.

According to one or more embodiments of the present disclosure, the processing module is configured to perform the following: determining a frequency corresponding to the intermediate audio data; and processing the frequency of the intermediate audio data using the preset frequency gain to obtain candidate audio data corresponding to the intermediate audio data.

According to one or more embodiments of the present disclosure, the processing module is configured to perform the following: determining volume and a frequency corresponding to the intermediate audio data; and processing the volume of the intermediate audio data using the preset volume gain, and processing the frequency of the intermediate audio data using the preset frequency gain to obtain candidate audio data corresponding to the intermediate audio data.

According to one or more embodiments of the present disclosure, the processing module is configured to perform the following: acquiring a preset sampling rate; sampling, based on the preset sampling rate, the first candidate audio data and the second candidate audio data respectively to obtain M pieces of sampled audio data corresponding to the first candidate audio data and M pieces of sampled audio data corresponding to the second candidate audio data, wherein M is an integer greater than or equal to 1; and mixing the M pieces of sampled audio data corresponding to the first candidate audio data and the M pieces of sampled audio data corresponding to the second candidate audio data to obtain the target audio data.

According to one or more embodiments of the present disclosure, the processing module is configured to perform the following: determining M groups of audio data, wherein an i-th group of audio data comprises an i-th piece of sampled audio data in the first candidate audio data and an i-th piece of sampled audio data in the second candidate audio data; mixing respective pieces of sampled audio data in each group of the audio data to obtain M pieces of mixed audio data; and determining that the target audio data comprises the M pieces of mixed audio data.

In a third aspect, the present disclosure provides a chip having a computer program stored thereon. Wherein the computer program, when executed by the chip, implement the method as described in any of the first aspects.

In a fourth aspect, the present disclosure provides a chip module having a computer program stored thereon. Wherein the computer program, when executed by the chip module, implement the method as described in any of the first aspects.

In a fifth aspect, an embodiment of the present disclosure provides an electronic device. The electronic device comprises at least one processor; and a memory communicatively connected to the at least one processor. Wherein the memory stores instructions executable by the at least one processor, and the instructions, when executed by the at least one processor, cause the at least one processor to perform the method as described in any of the first aspects.

In a sixth aspect, an embodiment of the present disclosure provides a non-transitory computer-readable storage medium storing computer instructions. Wherein the computer instructions are used to cause a computer to execute the method as described in any of the first aspects.

In a seventh aspect, an embodiment of the present disclosure provides a computer program product comprising a computer program. Wherein the computer program, when executed by a processor, implement the method as described in any of the first aspects.

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, the above features are replaced with the technical features with similar functions disclosed in the present disclosure (but not limited to) by each other to form a technical solution.

In addition, although each operation is described in a specific order, this should not be understood as requiring these operations to be performed in the specific order shown or in a sequential order. Under certain circumstances, multitasking and parallel processing may be advantageous. Similarly, although some specific implementation details are included in the above discussion, these should not be interpreted as limiting the scope of the present disclosure. Some features described in the context of a separate embodiment can also be implemented in a single embodiment in combination. On the contrary, the various features described in the context of a single embodiment can also be implemented in a plurality of embodiments individually or in any suitable sub-combination mode.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for processing audio data, applied in a first electronic device, and comprising:
receiving (S201) wirelessly first audio data and second audio data from a second electronic device, wherein the first electronic device and the second electronic device are wirelessly connected via Bluetooth, the first audio data corresponds to a first audio type, and the second audio data corresponds to a second audio type;
mixing (S202) the first audio data and the second audio data to obtain target audio data; and
playing (S203) the target audio data.

2. The method according to claim 1, wherein the first electronic device comprises a wearable device, and the second electronic device comprises a mobile terminal;
optionally, the wearable device comprises at least one of a headset, smart glasses, a smart watch, and a smart bracelet, and the second electronic device comprises at least one of a mobile phone, a laptop computer, and a tablet computer.

3. The method according to claim 1 or 2, wherein the first audio data comprises media audio data played by an audio and video player or call data of the second electronic device for a voice communication, and the second audio data comprises assistant audio data, and the assistant audio data comprises response audio data of the second electronic device to user voice data transmitted by the first electronic device;
optionally, the first audio data is transmitted to the first electronic device via at least one of a Hands-free Profile, HFP, protocol, a Headset Profile, HSP, protocol, and an Advanced Audio Distribution Profile, A2DP, protocol, and the second audio data is encoded in an Opus format in the second electronic device.

4. The method according to claim 3, wherein the assistant audio data comprises human voice.

5. The method according to any of claims 1 to 4, wherein in response to determining that the target audio data is played, volume for the first audio type is different from volume for the second audio type.

6. The method according to any of claims 1 to 5, wherein mixing the first audio data and the second audio data to obtain the target audio data comprises:
processing the first audio data and the second audio data using adjustment parameters of different sizes respectively, wherein the adjustment parameters comprise a preset volume gain and/or a preset frequency gain.

7. The method according to claim 6, wherein processing the first audio data and the second audio data using the adjustment parameters of different sizes respectively comprises:
determining (S302) a first preset adjustment parameter corresponding to the first audio data based on the first audio type corresponding to the first audio data; and
determining (S303) a second preset adjustment parameter corresponding to the second audio data based on the second audio type corresponding to the second audio data, wherein the first preset adjustment parameter and the second preset adjustment parameter are different in size.

8. The method according to claim 7, wherein processing the first audio data and the second audio data using the adjustment parameters of different sizes respectively comprises:
decompressing and decoding (S304) the first audio data and the second audio data respectively to obtain first intermediate audio data corresponding to the first audio data and second intermediate audio data corresponding to the second audio data;
processing (S305) the first intermediate audio data using the first preset adjustment parameter to obtain first candidate audio data corresponding to the first intermediate audio data, and processing the second intermediate audio data using the second preset adjustment parameter to obtain second candidate audio data corresponding to the second intermediate audio data; and
mixing (S306) the first candidate audio data and the second candidate audio data to obtain the target audio data.

9. The method according to claim 8, wherein for any intermediate audio data of the first intermediate audio data and the second intermediate audio data, the preset adjustment parameter corresponding to the intermediate audio data comprises the preset volume gain, and wherein processing the intermediate audio data using the preset adjustment parameter comprises: determining volume corresponding to the intermediate audio data; and processing the volume of the intermediate audio data using the preset volume gain to obtain candidate audio data corresponding to the intermediate audio data; or
wherein for any intermediate audio data of the first intermediate audio data and the second intermediate audio data, the preset adjustment parameter corresponding to the intermediate audio data comprises the preset frequency gain, and wherein processing the intermediate audio data using the preset adjustment parameter comprises: determining a frequency corresponding to the intermediate audio data; and processing the frequency of the intermediate audio data using the preset frequency gain to obtain candidate audio data corresponding to the intermediate audio data; or
wherein for any intermediate audio data of the first intermediate audio data and the second intermediate audio data, the preset adjustment parameter corresponding to the intermediate audio data comprises the preset volume gain and the preset frequency gain, and wherein processing the intermediate audio data using the preset adjustment parameter comprises: determining volume and a frequency corresponding to the intermediate audio data; and processing the volume of the intermediate audio data using the preset volume gain, and processing the frequency of the intermediate audio data using the preset frequency gain to obtain candidate audio data corresponding to the intermediate audio data.

10. The method according to claim 9, wherein mixing the first candidate audio data and the second candidate audio data to obtain the target audio data comprises:
acquiring a preset sampling rate;
sampling, based on the preset sampling rate, the first candidate audio data and the second candidate audio data respectively to obtain M pieces of sampled audio data corresponding to the first candidate audio data and M pieces of sampled audio data corresponding to the second candidate audio data, wherein M is an integer greater than or equal to 1; and
mixing the M pieces of sampled audio data corresponding to the first candidate audio data and the M pieces of sampled audio data corresponding to the second candidate audio data to obtain the target audio data.

11. The method according to claim 10, wherein mixing the M pieces of sampled audio data corresponding to the first candidate audio data and the M pieces of sampled audio data corresponding to the second candidate audio data to obtain the target audio data comprises:
determining M groups of audio data, wherein an i-th group of audio data comprises an i-th piece of sampled audio data in the first candidate audio data and an i-th piece of sampled audio data in the second candidate audio data;
mixing respective pieces of sampled audio data in each group of the audio data to obtain M pieces of mixed audio data; and
determining that the target audio data comprises the M pieces of mixed audio data.

12. An apparatus for processing audio data, comprising:
a receiving module configured to wirelessly receive first audio data and second audio data from a second electronic device, wherein the second electronic device and the apparatus for processing the audio data are wirelessly connected via Bluetooth, the first audio data corresponds to a first audio type, and the second audio data corresponds to a second audio type;
a processing module configured to mix the first audio data and the second audio data to obtain target audio data; and
a playing module configured to play the target audio data.

13. An electronic device, comprising:
at least one processor; and
a memory communicatively connected to the at least one processor; wherein
the memory stores instructions executable by the at least one processor, and the instructions, when executed by the at least one processor, cause the at least one processor to perform the method according to any of claims 1 to 11.

14. A non-transitory computer-readable storage medium storing computer instructions, wherein the computer instructions are used to cause a computer to execute the method according to any of claims 1 to 11.

15. A computer program product comprising a computer program, wherein the computer program, when executed by a processor, implements the method according to any of claims 1 to 11.
